(19)

Europäisches
Patentamt
European
Patent Office
Office européen
des brevets

(11)　**EP 4 692 849 A1**

(12)　**EUROPEAN PATENT APPLICATION**

(43) Date of publication:
　**11.02.2026　Bulletin 2026/07**

(21) Application number: **24193173.2**

(22) Date of filing: **06.08.2024**

(51) International Patent Classification (IPC):
　**G01S 13/90** *(2006.01)*

(52) Cooperative Patent Classification (CPC):
　**G01S 13/9021**

(84) Designated Contracting States:
　**AL AT BE BG CH CY CZ DE DK EE ES FI FR GB**
　**GR HR HU IE IS IT LI LT LU LV MC ME MK MT NL**
　**NO PL PT RO RS SE SI SK SM TR**
　Designated Extension States:
　**BA**
　Designated Validation States:
　**GE KH MA MD TN**

(71) Applicant: **Iceye Oy**
　**02150 Espoo (FI)**

(72) Inventors:
　• **Tolpekin, Valentyn**
　　**02150 Espoo (FI)**

　• **Zhang, Qiaoping**
　　**02150 Espoo (FI)**
　• **Wollersheim, Michael**
　　**02150 Espoo (FI)**

(74) Representative: **Papula Oy**
　**P.O. Box 981**
　**00101 Helsinki (FI)**

Remarks:
　Amended claims in accordance with Rule 137(2)
　EPC.

(54)　**SYSTEMS AND METHODS FOR EXTRACTING 3D FEATURES FROM SYNTHETIC APERTURE RADAR IMAGES**

(57)　Methods, systems, and techniques for extracting three-dimensional (3D) features from synthetic aperture radar (SAR) images are disclosed, comprising: obtaining two or more SAR images, each of the two or more SAR images comprising a scene imaged from respective positions; obtaining co-registered SAR images by co-registering the two or more SAR images to match points within the scene; determining residual offsets between matched points from the co-registered SAR images caused by differential layover; and determining a relative height of one or more points in the scene with respect to a reference elevation model based on the residual offsets and imaging position data of the respective positions from which the two or more SAR images were imaged.

*FIG. 2B*

EP 4 692 849 A1

**Description**

TECHNICAL FIELD

The present disclosure is directed to extracting three-dimensional (3D) features from synthetic aperture radar (SAR) images.

BACKGROUND

Extraction of 3D features using single and multi-dimensional Synthetic Aperture Radar (SAR) datasets can be accomplished today using several well-established methods, each with their own advantages and disadvantages. Example methods used to extract 3D features from SAR images include: SAR interferometric analysis ("InSAR"), Stereo Radargrammetry, and Residual Height Estimation From Persistent Scatterer Interferometry. The former methods tend to produce gridded raster elevation datasets, while the latter method can produce 3D point clouds, although with a requirement to collect a very deep stack of many tens of images before it can be accomplished.

These existing methods have several drawbacks. For example, radargrammetric analysis requires data to be collected from different angles to create a stereo image, however, the difference in look angle between the two images, i.e., the parallax angle, is large and must be within a predetermined range. The large parallax means that the two images look quite different from each other, making it harder to match points in the respective images and thus decreasing the accuracy and point density of the radargrammetric analysis. Moreover, to capture two SAR images with a large parallax for radargrammetric analysis increases the complexity and cost of SAR image capturing systems. InSAR uses phase data to detect small changes between images, and thus imposes a rigorous constraint of maintaining phase coherence of the images. However, areas with low coherence result in noise when observing these areas, which can be caused when the actual elevation in the scene has a large mismatch with an external elevation model used in the InSAR analysis. Further, pixel spacing (posting) provided by InSAR Digital Elevation Models (DEMs) are coarse and there may only be one or two points representing a height of an object (e.g. a building), which does not provide good elevation data with sufficient detail of such objects.

Accordingly, additional, alternative, and/or improved systems and methods for extracting 3D features from SAR images remain highly desirable.

SUMMARY

According to a first aspect of the present disclosure, there is provided a computer-implemented method for extracting three-dimensional (3D) features from synthetic aperture radar (SAR) images, comprising: obtaining two or more SAR images, each of the two or more SAR images comprising a scene imaged from respective positions; obtaining co-registered SAR images by co-registering the two or more SAR images to match points within the scene; determining residual offsets between matched points from the co-registered SAR images caused by differential layover; and determining a relative height of one or more points in the scene with respect to a reference elevation model based on the residual offsets and imaging position data of the respective positions from which the two or more SAR images were imaged.

In some aspects, the method further comprises: compensating for a two-dimensional planimetric shift of each of the one or more points in the scene from an actual planimetric position of each of the one or more points; and generating a 3D representation of the scene with the one or more points having the relative height at the actual planimetric position of the one or more points.

In some aspects, the 3D representation comprises a 3D point cloud with the one or more points. In some aspects, the method further comprises attributing the one or more points in the 3D point cloud with a pixel intensity indicative of height.

In some aspects, compensating for the two-dimensional planimetric shift of each of the one or more points in the scene comprises determining a range correction term based on the relative height of a corresponding point in the scene and the imaging position data.

In some aspects, the method further comprises generating an updated elevation model based on the relative height of the one or more points.

In some aspects, co-registering the two or more SAR images to match points within the scene comprises determining co-registration offsets between the matched points from the two or more SAR images, and determining a transformation model to minimize the residual offsets.

In some aspects, the co-registration offsets are representative of a distance between the matched points in pixel values in azimuth and range directions.

In some aspects, the matched points from the co-registered SAR images are matched at a sub-pixel resolution.

In some aspects, determining the residual offsets between the matched points comprises determining a residual distance between the matched points from the co-registered SAR images.

In some aspects, the residual offsets are determined in a range direction.

In some aspects, the scene comprises an object having an object height, and at least one point of the one or more points are located on the object.

In some aspects, the method further comprises determining the height of the object using the one or more points. In some aspects, the object comprises a building. In some aspects, a plurality of points are located on the object;

In some aspects, the two or more SAR images have a similar imaging geometry within a pre-defined threshold, and a resolution above a resolution threshold value.

In some aspects, the two or more SAR images are obtained from one or more synthetic aperture radar antennas.

In some aspects, the SAR images are acquired from a space-borne platform or an air-borne platform.

In accordance with another aspect of the present disclosure, there is provided a system for extracting three-dimensional (3D) features from synthetic aperture radar (SAR) images, comprising: a SAR image database comprising a plurality of SAR images; a processor; and a non-transitory computer readable medium having stored thereon computer program code that is executable by the processor and that, when executed by the processor, configures the system to perform the method of any one of the above aspects.

In accordance with another aspect of the present disclosure, there is provided a non-transitory computer readable medium having stored thereon computer program code that is executable by a processor and that, when executed by the processor, causes the processor to perform the method of any one of the above aspects.

This summary does not necessarily describe the entire scope of all aspects. Other aspects, features and advantages will be apparent to those of ordinary skill in the art upon review of the following description of specific embodiments.

BRIEF DESCRIPTION OF THE DRAWINGS

In the accompanying drawings, which illustrate one or more example embodiments:

FIG. 1 depicts an example of a system for capturing synthetic aperture radar (SAR) images;

FIGs. 2A and 2B depict an example of the layover phenomenon in SAR imaging;

FIGs. 3A and 3B depict two examples of differential layover in SAR images taken from two different positions;

FIG. 4 depicts a system for extracting 3D features from SAR images;

FIG. 5 depicts a computer-implemented method for extracting 3D features from SAR images;

FIG. 6 depicts examples of residual offsets determined from co-registration of two SAR images;

FIG. 7 depicts a representation of imaging geometry used for determining a height and actual position of a point in SAR images in accordance with the present disclosure;

FIG. 8 depicts a representation of points in an image, colorized by their height above ground;

FIG. 9 depicts a representation of processing height data to generate a 3D point cloud; and

FIG. 10 depicts an example of a 3D point cloud generated in accordance with the present disclosure.

DETAILED DESCRIPTION

In accordance with the present disclosure, methods, systems, and techniques for extracting three-dimensional (3D) features from synthetic aperture radar (SAR) images are disclosed based on co-registering two or more SAR images to match points within a scene imaged from respective positions, and determining residual offsets between matched points from the co-registered SAR images. A relative height of one or more points in the scene can be determined based on the residual offsets and imaging position data of the respective positions from which the two or more SAR images were imaged.

As described in more detail below, the residual offsets of the co-registered SAR images is caused by differential layover. It can be appreciated that SAR images inherently contain 3D information, even in a single image. The phenomenon whereby a point imaged at a height above the ground is projected to a 2D point in a SAR image is referred to as layover. The layover phenomenon and the distance that the point is projected in SAR images is directly related to the height of the point above the ground. Thus, by identifying points on the bottom and top of an object in a SAR image, and knowing the image geometry and SAR pixel spacing, the height of the object can be determined. However, identifying the bottom and top of the object requires the ability to see and extract the entirety of the object in order to determine its full height. Accordingly, determining the height of an object based on layover in a single image is challenging to do, particularly in an automated manner.

However, by collecting two or more images of a scene from slightly different positions, the layover of points in the scene is correspondingly different by some amount, and thus there is a differential layover. The differential layover relates directly to the height of that point above the terrain. Accordingly, the height of the point can be determined without needing to segment or identify the base location of objects in the scene (or even identify objects at all, which is a higher order task and challenging to perform). Moreover, the two-dimensional planimetric shift of such points in the scene due to the layover phenomenon can be compensated for, and the actual planimetric position of the point in the scene can be determined.

Thus, the height and actual planimetric position of points in a scene can be determined using residual offsets of co-registered SAR images caused by differential layover. This method of determining the residual offsets of co-registered SAR images and determining the height and actual planimetric position of points in the scene based on the residual offsets can be computer-implemented and fully automated. Further, by implementing this method at scale, for all residual offsets for matched points from co-registered SAR images, a 3D representation of the scene can be generated, such as a point cloud of all points in the scene for a set of SAR images with each point shown at its correct height and actual location. Additionally or alternatively, an elevation model may be updated, refined, or made to be more accurate with the determined height information of points in the scene.

The methods, systems, and techniques disclosed herein for extracting 3D features from SAR images allows for generation of 3D representations of a scene, including 3D terrain and surface models, unencumbered by the rigorous constraints of interferometry (and not relying on maintaining phase coherence), and also not requiring a large parallax as is the case with radargrammetric methods. Not having to maintain phase coherence, or possibly even having to use phase at all (as in the case of InSAR) and being able to estimate heights with images with a similar geometry (as in the case of radargrammetry) are key advantages over both InSAR and radargrammetry. Moreover, the methods, systems, and techniques disclosed herein for extracting 3D features from SAR images can provide a dense point cloud for objects in the scene (e.g. hundreds of points for a building), which is much finer resolution than what InSAR can provide, and is much more accurate than radargrammetry.

Accordingly, as the methods, systems, and techniques disclosed herein for extracting 3D features from SAR images allows for obtaining an accurate and dense 3D representation of a scene, the methods, systems, and techniques disclosed herein can be used for various applications. Such applications may include, but are not limited to: developing an accurate, fine-detailed elevation model; damage assessment, whereby the height of features/objects in the scene (e.g. a building) can be accurately determined (with many points per feature/object), and compared against a previously known height; terrain motion, whereby a changing height of the features of the terrain can be determined and attributed to movement of the terrain (e.g. a landslide); and many other applications where a detailed and accurate 3D representation of SAR images are desired. One potential limitation of the methods, systems, and techniques disclosed herein is that co-registering the SAR images requires matching points that are based on identifiable features. If the SAR images are of a scene lacking identifiable features (e.g. the scene comprises just vegetation such as a forest), the co-registration may be poor. However, it will be appreciated that this potential limitation could also be exploited, such as being able to provide a vegetation-free digital elevation model.

The SAR images used in the method in accordance with the present disclosure may be acquired from space-borne or air-borne platforms, without the complexity and cost of typical 3D capture methods like LiDAR and stereo photogrammetry. It is also independent of atmospheric influence and time of day. For example, SAR images can be obtained in cloudy and even rainy conditions, as well as during the night, unlike other methods such as optical imaging that rely on daylight and a clear view of the target area.

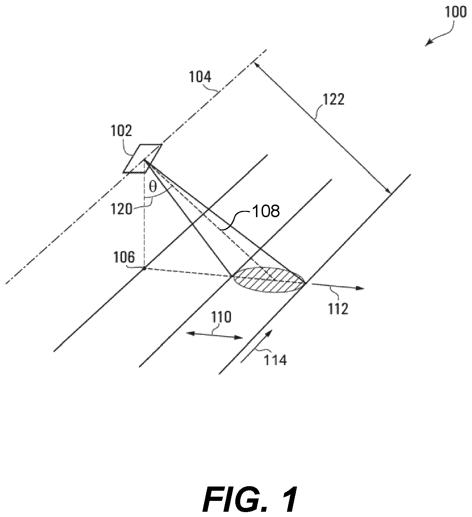

Embodiments are described below, by way of example only, with reference to Figures 1 to 10.

FIG. 1 depicts an example of a system for capturing synthetic aperture radar (SAR) images. More particularly, FIG. 1 shows schematically how an aerial or space-based antenna 102 is used to capture SAR images. The antenna 102 may be satellite or airplane mounted, for example. The antenna 102 travels along a flight path 104, and directly below the antenna 102 is the nadir 106. The antenna 102 emits a radar signal 108 at a look angle 120 that illuminates a swath 110 on the ground, which is offset from the nadir 106. The antenna 102 measures the radial line of sight distance between the antenna 102 and a point on the surface along a slant range 122. FIG. 1 also shows a range direction 112 and an azimuth direction 114, with the range direction 112 extending perpendicularly away from the flight path 104, and the azimuth direction 114 extending parallel to the flight path 104. In respect of the range direction 112, the swath 110 is between points along the range direction 112 referred to as the near range and the far range. Typically, a SAR system transmits radio-frequency radiation in pulses and records the returning echoes. Data derived from the returning echoes is sampled and stored for processing in order to form an image.

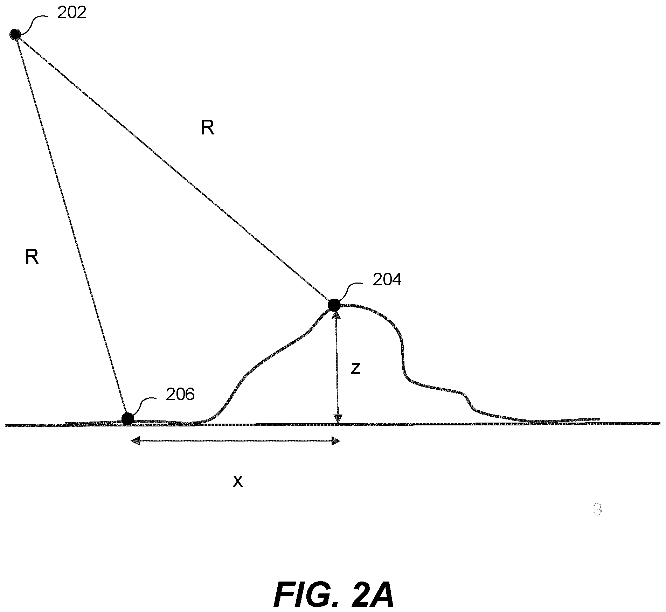

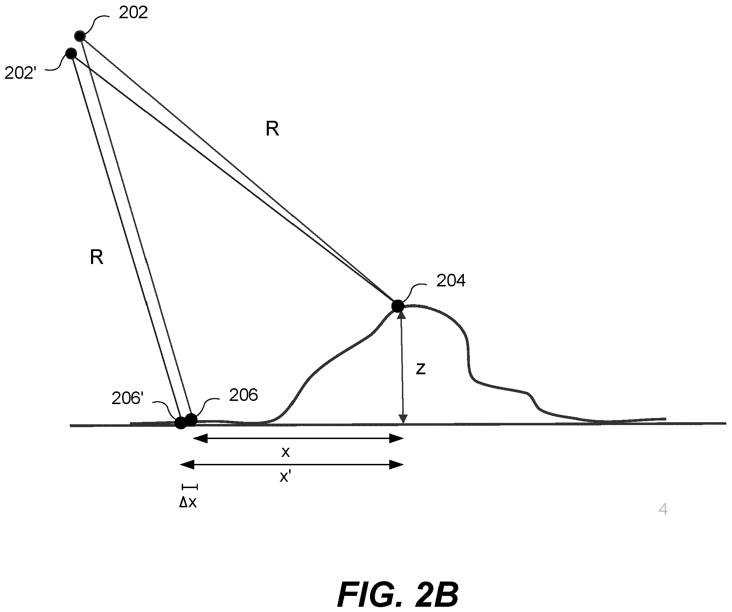

FIGs. 2A and 2B depict an example of the layover phenomenon in SAR imaging. As described above, SAR is a side-looking instrument, and the position of points of the terrain and of any objects above the terrain in a SAR image is influenced by elevation of those points.

FIG. 2A shows a representation of the layover phenomenon. As shown in FIG. 2A, for a SAR image captured from a point 202 representative of the position of the SAR antenna, the distance from point 202 to the ground 206 is measured as R, where R is a range from SAR antenna to a point (e.g. point 204) in the scene. This also provides for the location of the point along the ground by knowing the imaging geometry. However, a location error can arise due to the elevation for a given point (e.g. elevation = "z" of point 204) with respect to an underlying digital elevation model of the terrain used for processing the SAR image, because the distance R from the antenna at point 202 to the point 204, located at elevation offset Z, can be the same as the distance R measured from the antenna at point 202 to the point located at point 206 at a lower elevation. This results in a positional error (i.e. "x") of where the point 204 appears in the SAR image as if it were located at point 206. In other words, when the point 204 is at a height that differs from the height of that point in the elevation model (and hence the height at point 204 is unknown), the point 204 is projected onto an incorrect position by a position error "x" shown as point 206 having the same range R to the SAR antenna. This phenomenon, whereby the relative height of a point is shifted along the ground surface in a 2D image, is referred to as layover. If point 204 is the top of a building, for example, the building will appear to be "laid over" in the image, with radar returns from the bottom of the building appearing directly underneath point 204 in their proper location, and radar returns from the top of the building at point 204 appearing "laid over" on the ground at point 206.

FIG. 2B shows a representation of differential layover of two SAR images. As shown in FIG. 2B, for a second SAR image captured for a slightly different point 202' representative of the position of the SAR antenna, the point 204 in the scene has a different positional error (i.e. "x'") in the x direction and is projected to a different point 206' than point 206. The difference in the positional error between x and x', i.e. $\Delta x$, is referred to as differential layover.

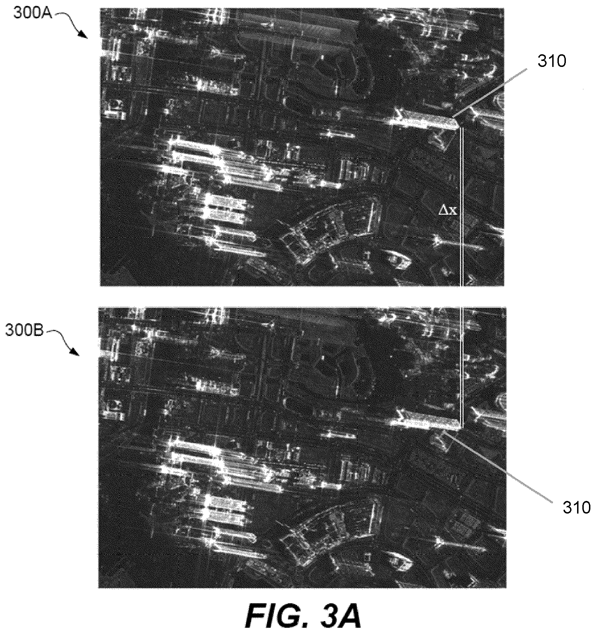

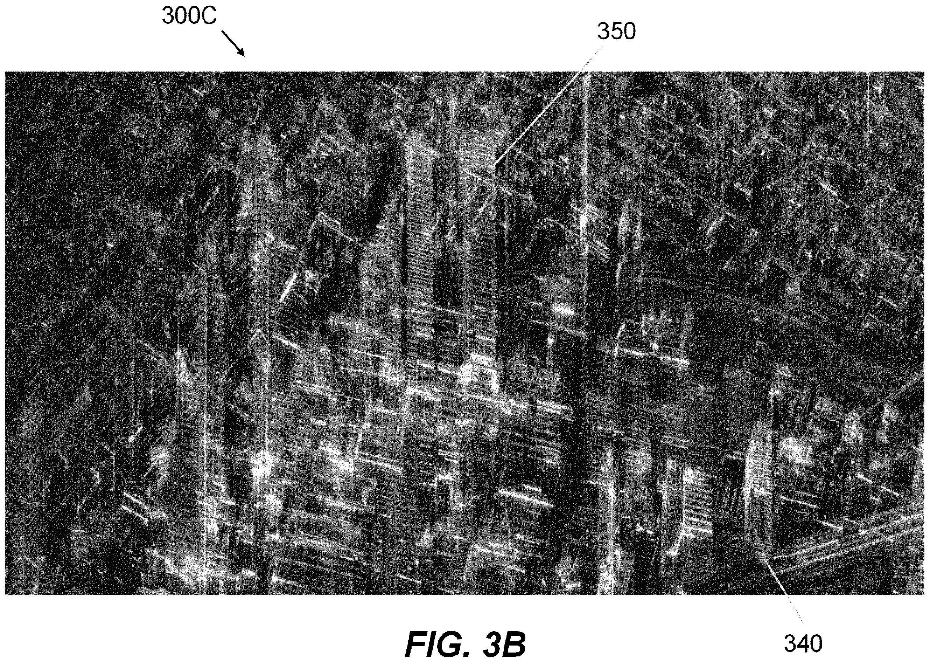

FIGs. 3A and 3B depict two examples of differential layover in SAR images taken from two different positions. FIG. 3A shows two SAR images 300A and 300B of the same scene taken from two different positions. In the SAR images 300A and 300B, objects in the scene (in this case, buildings in Abu Dhabi) having a relative height above the ground are highlighted. As seen in the images 300A and 300B, the relative height of points on a representative building 310 above the ground are represented as a 2D positional offset, due to the layover phenomenon explained above. Accordingly, while the points on the ground that are consistent with the elevation model are accurate and fixed in both scenes, the points on building 310 are slightly different between the two images 300A and 300B. A differential layover $\Delta x$ of a point at the top of building 310 between the two images 300A and 300B is shown.

FIG. 3B shows an example of a combined image 300C that overlays two SAR images, one on top of the other, of a scene taken from two different positions. In this case, the SAR images are of buildings in New York City. In combined image 300C, the amplitude values of one SAR image have been mapped to a channel with one colour (red), and the amplitude values of the other SAR image have been mapped to another channel with another colour (cyan). Features that show up in red, which appears as a first shade in greyscale, for example feature 340, are bright in the first SAR image, whereas features that show up in cyan, which appears as a second shade in greyscale, for example feature 350, are bright in the second SAR image. Features that have equal brightness in both images would appear as colourless in a combined colour image, and show up as other shades of gray ranging in brightness from black to white. White features represent equally bright scattering in both images. The shading in the combined image 300C highlights the differential layover because the shifted ledges and points on a building that have moved between the two images due to differences in layover between the first and the second images can be clearly seen, and because the difference in brightness of particular features due to imaging at slightly different angles also becomes apparent.

As described above, the differential layover between points in SAR images taken from respective positions is directly related to the height of those points above the ground. In accordance with the present disclosure, automated systems and computer-implemented methods are disclosed for extracting 3D features from SAR images and determining a relative height of one or more points above (or below) the ground utilizing the differential layover phenomenon.

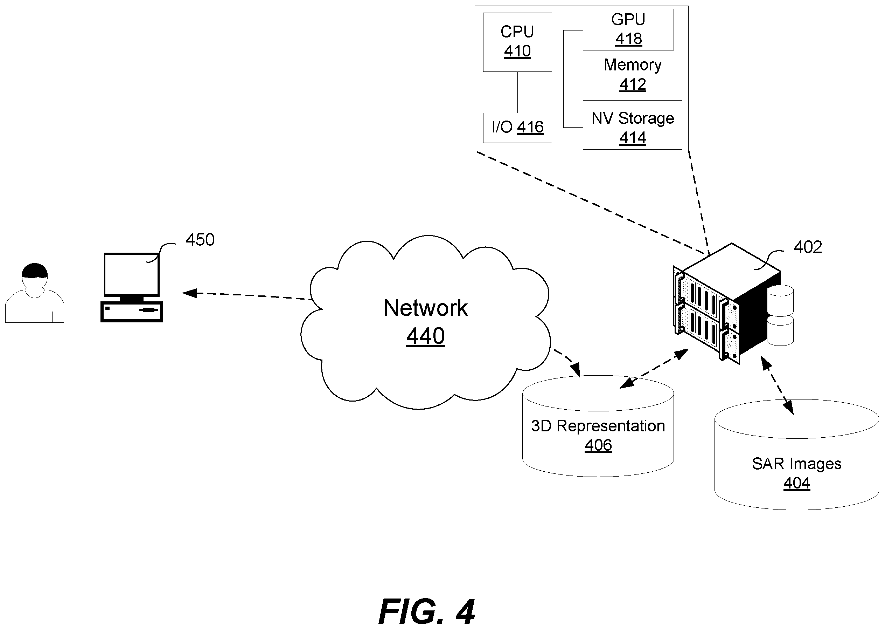

FIG. 4 depicts a system for extracting 3D features from SAR images. The system comprises one or more servers 402 configured to automatically extract 3D features from SAR images stored in a database 404. The one or more servers 402 may further be configured to automatically generate 3D representations of a scene, such as a 3D point cloud, a more accurate digital terrain and/or surface models, etc., using the extracted 3D features. Generated 3D representations may be stored in a database 406, and can be used for various applications as described herein, or may be output to a client computing device 450 over a network 440 for viewing by customers.

The server(s) 402 each comprise a CPU 410, a non-transitory computer-readable memory 412, a non-volatile storage 414, an input/output interface 416, and may also comprise graphical processing units ("GPU") 418. The non-transitory computer-readable memory 412 comprises computer-executable instructions stored thereon at runtime which, when executed by the CPU 410, configure the server to perform a method for extracting 3D features from SAR images, as described in more detail herein. The non-volatile storage 414 has stored on it computer-executable instructions that are loaded into the non-transitory computer-readable memory at runtime. In addition to computer-readable instructions for performing a method for extracting 3D features from SAR images, the servers 402 may also comprise various other software used to implement the method, such as co-registration software, as described in more detail below. The input/output interface 416 allows the server to communicate with one or more external devices (e.g. via network 440). The GPU 418 may be used to control a display and may also be used to implement aspects of the method. It will be appreciated that there may be multiple servers 402 implemented as part of the system, and that multiple servers 402 may be networked together and collectively perform the methods disclosed herein using distributed computing.

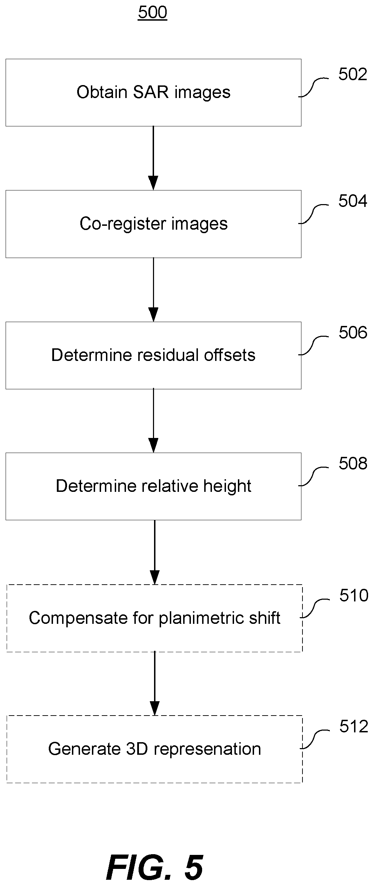

FIG. 5 depicts a computer-implemented method for extracting 3D features from SAR images. The method 500 can be fully automated, and may be performed by the one or more servers 402 described with reference to FIG. 4, such as upon execution of the computer-executable instructions.

The method 500 comprises obtaining two or more SAR images (502), each of the two or more SAR images comprising a scene imaged from respective positions. The two or more SAR images each also have imaging position data associated therewith describing the respective positions from which the two or more SAR images were imaged. Unlike radargrammetric techniques, which require a large parallax, the two or more SAR images obtained for the method 500 should have a similar imaging geometry within a pre-defined threshold. The optimal geometry difference between the two images is a normal baseline in a range that is (a) not too small, as the sensitivity of the method is increasing as the normal baseline increases, and (b) not too long, as image matching described below becomes inaccurate for many points. Also, the incidence angle is important, as lower values result in larger displacements of objects from their true location due to height differences. Accordingly, lower incidence angles manifest in higher degree of layover, however, image resolution also degrades slightly at lower incidence angles, which may erode some of those benefits. The two or more SAR images should also have a resolution above a resolution threshold value that is high enough to resolve the features in the scene that one would like to extract in 3D. The two or more SAR images can be obtained from one, or more than one, synthetic aperture radar antennas. The SAR images may be acquired from a space-borne or an air-borne platform.

Co-registered SAR images are obtained (504) by co-registering the two or more SAR images to match points within the scene. Co-registration may be performed by an external software package, such as using a SAR processing tool by Sarproz, for example. The co-registration software may be automatically executed as part of the method 500. The main steps of co-registration comprise: (1) selecting a large number of candidate matching points from pixels in the reference image, distributed either by grid (uniform), bright point targets or regularized bright point target; (2) selecting a 2D mode (where all points are assumed to have equal elevation) or 3D mode (where elevation is selected from an external elevation model); (3) applying image matching to identify the co-registration offsets between the images, wherein the co-registration offsets are expressed as a distance between the matched points in pixel values in the azimuth and range directions; (4) storing correlation values and signal-to-noise ratio values as a result of the image matching; (5) determining a transformation model (e.g. a polynomial model of selected order) from the co-registration offsets; and (6) applying the transformation model to obtain a pair of co-registered images. In selecting a mode for performing the co-registration, both 2D or 3D could be useful. The 3D mode is typically preferred because for many points (on the ground) a correct elevation is used and the residual offsets are close to 0, which simplifies the processing as only the points elevated above the terrain need to be processed. On the other hand, a 2D mode can be used particularly when no external elevation model is available or such model has poor quality (e.g. it is outdated, has too coarse a resolution, there are voids or other quality concerns, etc.). In this case many points may have a residual offset and residual height.

Accordingly, the co-registration more generally comprises matching points within the scene by determining co-registration offsets between the matched points from the two or more SAR images, and determining a transformation model to minimize the residual offsets. More specifically, once co-registration offsets are determined, a set of reliable matching points is identified such that the transformation model can be determined from these points and the transformation model applied to these points to result in residual offsets close to 0. The procedure of matching point selection is iterative because outliers need to be removed in the process. The quality of points is controlled by the RMS error that may for example be set to 0.05 pixels. If the number of selected matching points is below a specified threshold (depends on the scene, but for example a default value of 50 may be used), then the co-registration is considered failed. The correlation values and signal-to-noise ratio values can also be used to judge the quality of the matching points. Accordingly, the quality of the co-registration may be evaluated to ensure that the co-registered SAR images are valid. In case of successful co-registration, the residual offset values are zero for large number of points. The co-registration may be used to achieve sub-pixel registration quality (e.g. $1/20^{th}$ of a pixel), and thus provides finely co-registered images.

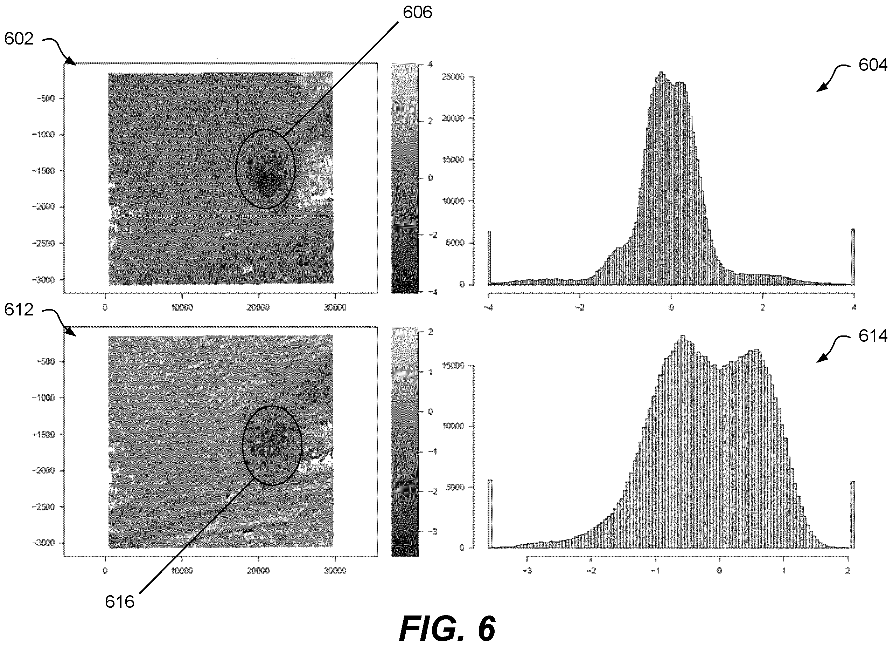

Residual offsets between matched points from the co-registered SAR images are determined (506). The residual offsets can be determined as a residual distance between the matched points from the co-registered SAR images, i.e., a remaining distance between matched points after applying the transformation model to obtain the co-registered images. Non-zero residual offsets can be attributed to an incorrect reference elevation model, which are typically coarse and are not perfect. It is also possible that non-zero residual offsets may be caused by an actual displacement (e.g. glacier ice sheet, landslide, a moving vehicle), which can be ruled out or confirmed by selecting a short time interval between the images or by selecting a larger number of pairs and measuring the displacement velocity in case of a linear displacement process. Residual offsets are described in more detail with reference to FIG. 6.

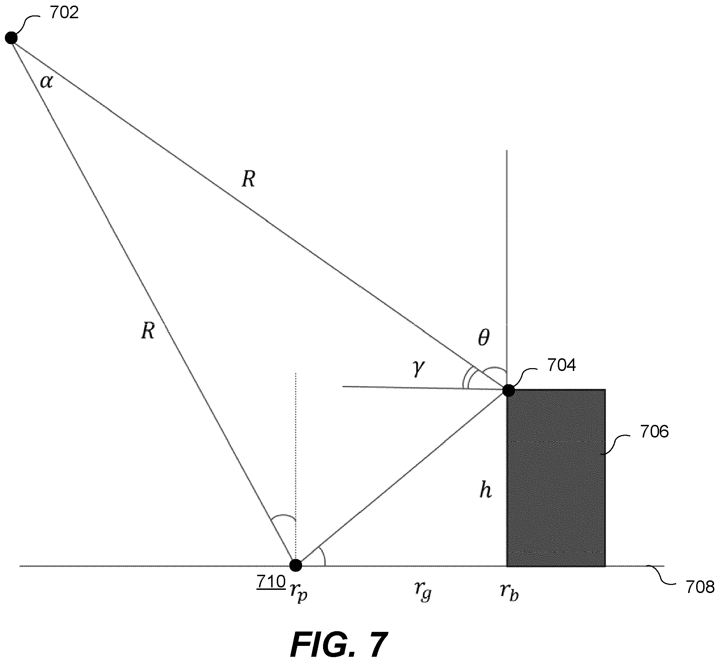

A relative height of one or more points in the scene with respect to a reference elevation model is determined based on the residual offsets and imaging position data of the respective positions from which the two or more SAR images were imaged (508). The residual offsets that are considered may particularly be in the range direction (because layover typically occurs in the range direction). The calculation methodology for determining the relative height of the one or more points in the scene is described in more detail with reference to FIG. 7. In some embodiments, the scene comprises an object having an object height and at least one point of the one or more points are located on the object such that the height of the object can be determined. In some embodiments, the object comprises a building. In some embodiments, there are a plurality of points located on the object (e.g. the building), and thus a fine resolution of the object height can be determined.

The method 500 may further comprise compensating for a two-dimensional planimetric shift of each of the one or more points in the scene from an actual planimetric position of each of the one or more points (510). For example, compensating for the two-dimensional planimetric shift of each of the one or more points in the scene may comprise determining a range correction term based on the relative height of a corresponding point in the scene and the imaging position data.

A 3D representation of the scene may be generated (512), where the one or more points are represented at the relative height and at the actual planimetric position of the one or more points. The 3D representation may comprise a 3D point cloud with the one or more points. Further, the one or more points may be attributed in the 3D point cloud with a pixel intensity indicative of height to visually enhance the 3D point cloud. Additionally or alternatively, an updated elevation model may be generated based on the relative height of the one or more points (e.g. by updating an existing elevation model with the height and position data, or by turning a point cloud into a DEM such as by means of resampling to a raster grid). It will be appreciated that obtaining accurate elevation data and/or generating a 3D representation of a scene has many applications and is not limited to those disclosed herein.

FIG. 6 depicts examples of residual offsets determined from co-registration of two SAR images. As described above, co-registration of two or more SAR images identifies features in the images and matches points between the images. The distance in pixels between matched points is determined for the range and azimuth directions, and referred to as co-registration offsets. A transformation model, such as a polynomial of selected order, may be used to determine a best fit to transform the position of points in one image to get as close as possible to matching points in another image. However, there may still be some amount of offset remaining between the matched points even after applying the transforming model. This remaining offset is referred to as a residual offset, i.e., a distance between matched points after applying the transformation model. If the underlying elevation model perfectly describes the terrain and any objects of the terrain, the residual offsets should be zero as every point should be perfectly matched by the co-registration. However, where the elevation model does not correctly describe the terrain and/or objects on the terrain, there will be residual offsets between matching points on the co-registered images caused by the differential layover phenomenon.

The plot 602 shows residual offsets in a range direction for each point of co-registered images. The plot 602 represents a scene that is shaded based on residual offsets in a range direction between points in co-registered images. As seen in the plot 602, there is a clear relationship between residual offsets of points in the range direction and an elevation of the points, as seen by a region of points 606 with a negative residual offset that correspond to an excavation present in the co-registered images. The graph 604 shows the number of points on the y-axis as a function of residual offset on the x-axis. As can be seen in the plot 602 and the graph 604, there are a large number of points with a residual offset of approximately zero, indicating a good co-registration of the images. However, a ground feature, in this case the excavation, resulted in the underlying elevation model used for co-registration to be incorrect in this area of the scene, and therefore, there is a high magnitude of non-zero residual offsets seen in points on this feature. A limit of +4 and -4 was set to reduce noise, so all points with a residual offset of less than -4 appear in the graph 604 at -4, and all points with a residual offset of greater than +4 appear in the graph 604 at +4.

Similarly, the plot 612 shows residual offsets in an azimuth direction for each point of the co-registered images. The plot 612 represents a scene that is shaded based on residual offsets in an azimuth direction between points in co-registered images. Similar to the plot 602, there is also a clear relationship between residual offsets of points in the azimuth direction and an elevation of the points, as seen by a region of points 616 with a negative residual offset that correspond to the excavation present in the co-registered images. The graph 614 shows number of points on the y-axis as a function of residual offset on the x-axis. As can be seen in the plot 612 and the graph 614, there are a large number of points with a residual offset of approximately zero, indicating a good co-registration of the images. However, there is a high magnitude of residual offsets seen in points corresponding to the excavation present in the scene of the co-registered images.

FIG. 7 depicts a representation of variables used for determining a height and actual position of a point in SAR images based on imaging geometry in accordance with the present disclosure. As described above, based on known imaging position data of the respective positions from which the two or more SAR images were imaged, the residual offsets after co-registration can be used to determine a height of one or more points in the scene, and further to compensate for a two-dimensional planimetric shift of the one or more points in the scene from an actual planimetric position of the one or more points. The following description describes using residual offsets in the range direction between points in co-registered SAR images to determine a height of the points and a planimetric shift of the points. However, as described above with reference to plot 612 in FIG. 6, residual offsets in the azimuth direction are also related to an elevation of points in co-registered images and can be used instead of or in addition to residual offsets in the range direction, with equations modified appropriately.

In FIG. 7, for a SAR image captured from a point 702 representative of the position of the SAR antenna, R is a range from SAR antenna to a point 704 of an object 706 having an unknown height h above the ground 708, and the point 704 of the object 706 is projected onto the ground at an incorrect position $r_p$ 710 by a ground plane layover distance of $r_g$. It will be appreciated that the object 706 may for example be a structure such as a building or a feature of the terrain itself (e.g. hills, pits, etc.).

For flat terrain, the height h of the point 704 above the ground 708 can be calculated using Equation 1:

$$h = -\frac{r_g}{\tan \gamma} \qquad (1)$$

where $r_g$ is the displacement in the range direction, measured on the ground in units of meters, and $\gamma$ is the grazing angle in units of radians, as shown in FIG. 7. The displacement in the range direction, $r_g$, is directly related to the residual offsets between co-registered SAR images, as described below.

A slant plane extends in the range and azimuth directions, i.e. $(r, a)$. The elevation model at a given point in the scene can be expressed as elevation or height $H(r, a)$. A height of the object at the base $b$ of the object is thus $h_b = H(r_b, a)$. The height of the projected point $r_p$ 710 is thus $h_p = H(r_p, a)$. Since the layover phenomenon occurs in the range direction, the azimuth positions need not be considered.

Based on the foregoing, Equation 1 may be rewritten as Equation (2):

$$\tan \gamma = \frac{r_p - r_b}{h_b - h_p + h} \qquad (2).$$

For a pair of images, where a first image is denoted by subscript 1, and a second image is denoted by subscript 2, the above equations may be rewritten as Equations (3) and (4):

$$-r_{g1} = \tan \gamma_1 \left( h - \left( H\left(r_{p1}, a\right) - H(r_b, a) \right) \right) \qquad (3)$$

$$-r_{g2} = \tan \gamma_2 \left( h - \left( H\left(r_{p2}, a\right) - H(r_b, a) \right) \right) \qquad (4).$$

Combining Equations (3) and (4) yields Equation (5):

$$r_{g2} - r_{g1} = h(\tan \gamma_1 - \tan \gamma_2) + H(r_b, a)(\tan \gamma_1 - \tan \gamma_2) - H\left(r_{p1}, a\right)\tan \gamma_1 +$$
$$H\left(r_{p2}, a\right)\tan \gamma_2 \qquad (5).$$

For the flat terrain case, $H(r_{p1}, a) = H(r_{p2}, a) = H(r_b, a)$, and accordingly, Equation (5) can be simplified to Equation (6):

$$r_{g2} - r_{g1} = h(\tan \gamma_1 - \tan \gamma_2) \qquad (6).$$

The residual offset, $\rho$, for a given pair of matched points in co-registered images, is expressed in pixels and determined from co-registered images as described above. The residual offset is in the slant plane, and can be expressed as Equation (7):

$$\rho = r_{s2} - r_{s1} \qquad (7)$$

Let us denote $\Delta r_s$ as the slant range spacing (the subscript "s" denotes slant range) of the reference (master) image. The slant range spacing in pixels can be converted to units of distance (e.g. meters) based on the image geometry, and a range ground spacing $\Delta r_g$ in meters can be calculated using Equation (8):

$$\Delta r_g = \frac{\Delta r_s}{\sin\theta} \qquad (8)$$

where $\theta$ is the incidence angle in radians (as shown in FIG. 7).

Thus, the residual offset can be converted to the ground plane (denoted by subscript "g") by using

$$\sin\theta = \cos\gamma \quad , \qquad r_{s1} = \frac{r_{g1}\cos\gamma_1}{\Delta r_s} = -\frac{h}{\Delta r_s}\cos\gamma_1 \tan\gamma_1 \quad , \text{ and } \qquad r_{s2} = \frac{r_{g2}\cos\gamma_1}{\Delta r_s} = \qquad , \text{ and rewriting}$$

Equations (7) and (8) as Equation (9):

$$\rho = r_{s2} - r_{s1} = \frac{1}{\Delta r_s}\left(r_{g2}\cos\gamma_1 - r_{g1}\cos\gamma_1\right) = \frac{h}{\Delta r_s}\cos\gamma_1(\tan\gamma_1 - \tan\gamma_2) \qquad (9).$$

A conversion factor, c, can be defined as $c = \frac{h}{\rho}$, which relates residual height $h$ to the residual offset $\rho$ for a specific slant plane pixel spacing in range and grazing angle. This conversion factor expresses the sensitivity of the method to height, where finer elevation differences can be derived from finer spatial resolution in range.

For the flat terrain assumption, i.e. where $H(r_{p1}, a) = H(r_{p2}, a) = H(r_b, a)$, the conversion factor can be expressed as Equation (10):

$$c = \frac{h}{\rho} = \frac{\Delta r_s}{\sin\gamma_1 - \sin\gamma_2 \frac{\cos\gamma_1}{\cos\gamma_2}} \qquad (10).$$

For the general case (i.e. not assuming flat terrain), Equation (10) may be rewritten as Equation (11), and rewritten further as Equation (12) to calculate the height:

$$\rho = \frac{\cos\gamma_1}{\Delta r_s} h(\tan\gamma_1 - \tan\gamma_2) + H(r_b, a)(\tan\gamma_1 - \tan\gamma_2) - H(r_{p1}, a)\tan\gamma_1 +$$
$$H(r_{p2}, a)\tan\gamma_2 \qquad (11)$$

$$h(\tan\gamma_1 - \tan\gamma_2) = \rho\frac{\Delta r_s}{\cos\gamma_1} - H(r_b, a)(\tan\gamma_1 - \tan\gamma_2) + H(r_{p1}, a)\tan\gamma_1 -$$
$$H(r_{p2}, a)\tan\gamma_2 \qquad (12).$$

With the calculated height, and referring back to Equations (1) and (2), a correction term in the range direction, $r_g$, can be calculated using Equation (13):

$$-r_g = \tan\gamma\,(h - (H(r_p, a) - H(r_b, a))) \qquad (13)$$

Accordingly, the height of each point and a range correction term of each point can be calculated from the residual offset for that point in co-registered images. This process can be automated and repeated for each point in the co-registered images having a non-zero residual offset value, thus providing a height and actual planimetric position for each point in the scene.

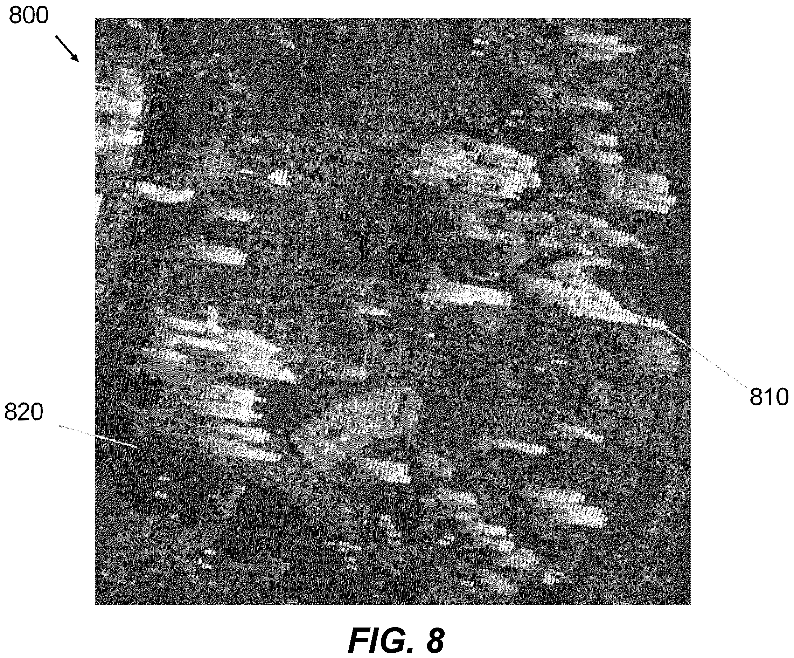

FIG. 8 depicts a representation of points in an image 800, shaded by their height above ground, as determined using the method 500. The points in the image 800 are shown at their projected position caused by the layover phenomenon, but the relative height of these points as determined for example using the method 500 is conveyed by the shading of the points, where brighter shading represents a higher height above the ground. In image 800, the points with the highest relative heights at the tops of the buildings appear more brightly, for example at the top of building 810, whereas areas on the ground (for example as determined by a digital elevation model) such as area 820 are shown in black. The image 800 represents one example of a 3D representation of the scene that may be generated in accordance with the present disclosure.

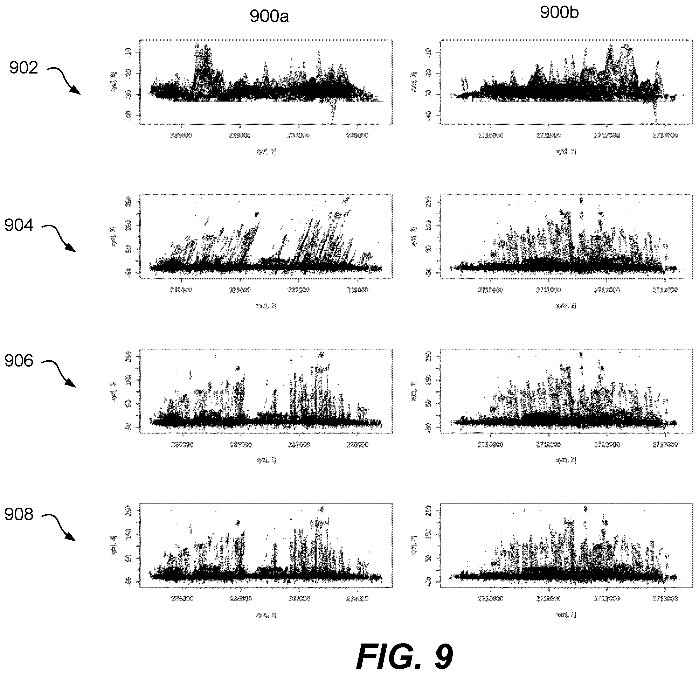

FIG. 9 depicts a representation of processing height data to generate a 3D point cloud. The processing is shown for two sets of image data, namely image data 900a in the x-direction and image data 900b in the y-direction.

At 902, the height for all points in x and y directions (Universal Transverse Mercator (UTM) coordinates) is obtained from the external or reference digital elevation model with terrain height. At 904, the residual height (i.e. the height of points calculated in accordance with the methods described above) is added to the terrain height (notice the y-axis values in the plots at 904 compared to the plots at 902). However, the points have not been compensated for the planimetric shift. Accordingly, the objects (in this case buildings) are seen as leaning, which must be compensated for. As described above, a range correction term can be calculated for each point, which can be decomposed into x- and y- directions in a UTM coordinate system. At 906, the lean has been compensated in the x-direction, and at 908, the lean has been compensated in the y-direction, thus obtaining a 3D point cloud.

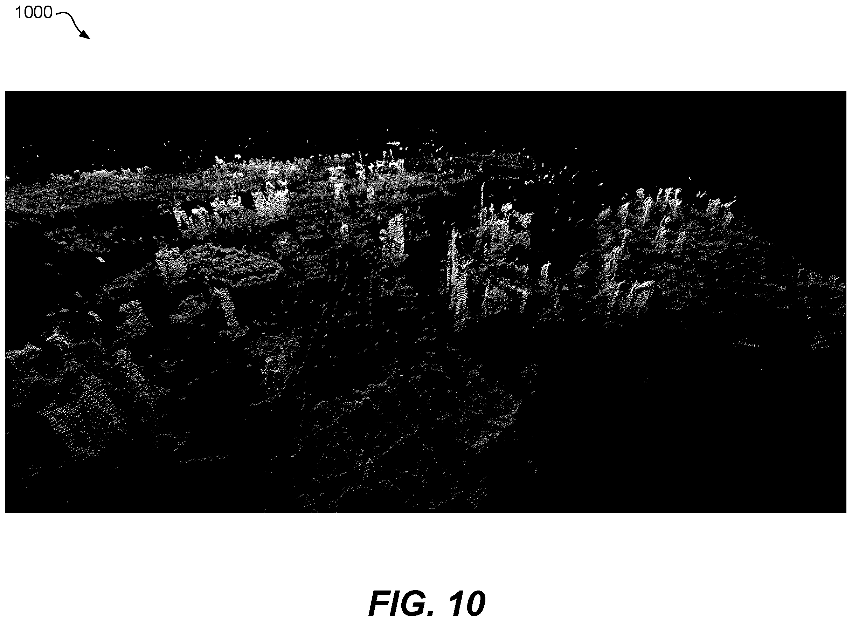

FIG. 10 depicts an example of an oblique view of a 3D point cloud 1000 generated in accordance with the present disclosure. As described above, a 3D point cloud may be generated for the scene based on the heights and actual planimetric positions of points as determined using the method 500. In this case, the scene shown is once again of buildings in Abu Dhabi. The points above the ground are highlighted in the point cloud 1000. Further, attributes of pixel intensity indicative of height may be applied to points in the 3D point cloud to provide further visual enhancement of the 3D representation.

Although examples of urban areas with buildings are shown, point clouds can also be generated for topography, for example to show greater resolution in height variations or finer detail in an area where no DEM or only a coarse DEM exists. Instead of using buildings for co-registration, co-registration could be done with performed with distinct geographical features such as the peak of a mountain, ridgelines, valleys, depressions, bodies of water, etc. For example, a point cloud similar to that shown in FIG. 10 could be generated for the area represented in FIG. 6 showing the depression resulting from an excavation.

As can be seen, the embodiments described above solve a number of different problems and provide quite a few significant advantages over the prior art. For example, compared to single image methods using layover to determine the height of a feature such as a building, the bottom of the building does not need to be visible to determine the height of the building. Furthermore, in addition to just determining the height of the building, intermediate points on the building can be determined. In fact, a whole 3D point cloud can be generated without the need for radargrammetry or for having to use phase information as in some prior art inSAR methods. Once generated, the 3D point cloud can used and viewed in a number of ways. For example, it can be used to refine a DEM of an area, or it can be used to create rich and detailed 3D representations of an area in a way that was not previously possible using SAR images. The method can be used to obtain 3D representations of buildings of urban areas, topography in a non-urban area, or any other type of area where 3D information about features is desired. The 3D representations can also be from any number of different angles. Notably, as is the case in FIG. 10, views can be generated from angles that are quite different from the angles from which the satellites or aircraft acquired the SAR imagery from. Other applications and advantages are also possible and will be apparent to one skilled in the art.

The embodiments have been described above with reference to flow, sequence, and block diagrams of methods, apparatuses, systems, and computer program products. In this regard, the depicted flow, sequence, and block diagrams illustrate the architecture, functionality, and operation of implementations of various embodiments. For instance, each block of the flow and block diagrams and operation in the sequence diagrams may represent a module, segment, or portion of code, which comprises one or more executable instructions for implementing the specified action(s). In some alternative embodiments, the action(s) noted in that block or operation may occur out of the order noted in those figures. For example, two blocks or operations shown in succession may, in some embodiments, be executed substantially concurrently, or the blocks or operations may sometimes be executed in the reverse order, depending upon the functionality involved. Some specific examples of the foregoing have been noted above but those noted examples are not necessarily the only examples. Each block of the flow and block diagrams and operation of the sequence diagrams, and combinations of those blocks and operations, may be implemented by special purpose hardware-based systems that perform the specified functions or acts, or combinations of special purpose hardware and computer instructions.

The terminology used herein is for the purpose of describing particular embodiments only and is not intended to be limiting. Accordingly, as used herein, the singular forms "a", "an", and "the" are intended to include the plural forms as well, unless the context clearly indicates otherwise (e.g., a reference in the claims to "a challenge" or "the challenge" does not exclude embodiments in which multiple challenges are used). It will be further understood that the terms "comprises" and "comprising", when used in this specification, specify the presence of one or more stated features, integers, steps, operations, elements, and components, but do not preclude the presence or addition of one or more other features, integers, steps, operations, elements, components, and groups. Directional terms such as "top", "bottom", "upwards", "downwards", "vertically", and "laterally" are used in the following description for the purpose of providing relative reference only, and are not intended to suggest any limitations on how any article is to be positioned during use, or to be mounted in an assembly or relative to an environment. Additionally, the term "connect" and variants of it such as "connected", "connects", and "connecting" as used in this description are intended to include indirect and direct connections unless otherwise indicated. For example, if a first device is connected to a second device, that coupling may be through a direct connection or through an indirect connection via other devices and connections. Similarly, if the first device is communicatively connected to the second device, communication may be through a direct connection or through an indirect connection via other devices and connections. The term "and/or" as used herein in conjunction with a list means any one or more items from that list. For example, "A, B, and/or C" means "any one or more of A, B, and C".

It is contemplated that any part of any aspect or embodiment discussed in this specification can be implemented or combined with any part of any other aspect or embodiment discussed in this specification.

The scope of the claims should not be limited by the embodiments set forth in the above examples, but should be given the broadest interpretation consistent with the description as a whole.

It should be recognized that features and aspects of the various examples provided above can be combined into further examples that also fall within the scope of the present disclosure. In addition, the figures are not to scale and may have size and shape exaggerated for illustrative purposes.

## Claims

1. A computer-implemented method for extracting three-dimensional (3D) features from synthetic aperture radar (SAR) images, comprising:

   obtaining two or more SAR images, each of the two or more SAR images comprising a scene imaged from respective positions;
   obtaining co-registered SAR images by co-registering the two or more SAR images to match points within the scene;
   determining residual offsets between matched points from the co-registered SAR images caused by differential layover; and
   determining a relative height of one or more points in the scene with respect to a reference elevation model based on the residual offsets and imaging position data of the respective positions from which the two or more SAR images were imaged.

2. The method of claim 1, further comprising:

   compensating for a two-dimensional planimetric shift of each of the one or more points in the scene from an actual planimetric position of each of the one or more points; and
   generating a 3D representation of the scene with the one or more points having the relative height at the actual planimetric position of the one or more points.

3. The method of claim 2, wherein compensating for the two-dimensional planimetric shift of each of the one or more points in the scene comprises determining a range correction term based on the relative height of a corresponding point in the scene and the imaging position data.

4. The method of any one of claims 1 to 3, further comprising generating an updated elevation model based on the relative height of the one or more points.

5. The method of any one of claims 1 to 4, wherein co-registering the two or more SAR images to match points within the scene comprises determining co-registration offsets between the matched points from the two or more SAR images, and determining a transformation model to minimize the residual offsets.

6. The method of claim 5, wherein the co-registration offsets are representative of a distance between the matched points in pixel values in azimuth and range directions.

7. The method of any one of claims 1 to 6, wherein the matched points from the co-registered SAR images are matched at a sub-pixel resolution.

8. The method of any one of claims 1 to 7, wherein determining the residual offsets between the matched points comprises determining a residual distance between the matched points from the co-registered SAR images.

9. The method of claim 8, wherein the residual offsets are determined in a range direction.

10. The method of any one of claims 1 to 9, wherein the scene comprises an object having an object height, and at least one point of the one or more points are located on the object.

11. The method of any one of claims 1 to 10, wherein the two or more SAR images have a similar imaging geometry within a pre-defined threshold, and a resolution above a resolution threshold value.

12. The method of any one of claims 1 to 11, wherein the two or more SAR images are obtained from one or more synthetic aperture radar antennas.

13. The method of any one of claims 1 to 12, wherein the SAR images are acquired from a space-borne platform or an air-borne platform.

14. A system for extracting three-dimensional (3D) features from synthetic aperture radar (SAR) images, comprising:

a SAR image database comprising a plurality of SAR images;
a processor; and
a non-transitory computer readable medium having stored thereon computer program code that is executable by the processor and that, when executed by the processor, configures the system to perform the method of any one of claims 1 to 13.

15. A non-transitory computer readable medium having stored thereon computer program code that is executable by a processor and that, when executed by the processor, causes the processor to perform the method of any one of claims 1 to 13.

**Amended claims in accordance with Rule 137(2) EPC.**

1. A computer-implemented method for extracting three-dimensional (3D) features from synthetic aperture radar (SAR) images, comprising:

obtaining (502) two or more SAR images, each of the two or more SAR images comprising a scene imaged from respective positions;
co-registering (504) the two or more SAR images to match points within the scene to obtain co-registered SAR images;
determining (504) residual offsets between matched points from the co-registered SAR images caused by differential layover; and
determining (506) a relative height of one or more points in the scene with respect to a reference elevation model based on the residual offsets and imaging position data of the respective positions from which the two or more SAR images were imaged.

2. The method of claim 1, further comprising:

compensating (510) for a two-dimensional planimetric shift of each of the one or more points in the scene from an actual planimetric position of each of the one or more points by determining a range correction term based on the relative height of a corresponding point in the scene and the imaging position data; and
generating (512) a 3D representation of the scene with the one or more points having the relative height at the actual planimetric position of the one or more points.

3. The method of claim 1 or claim 2, further comprising generating an updated elevation model based on the relative height of the one or more points.

4. The method of any one of claims 1 to 3, wherein co-registering (504) the two or more SAR images to match points within the scene comprises determining co-registration offsets between the matched points from the two or more SAR images, and determining a transformation model to minimize the residual offsets.

5. The method of claim 4, wherein the co-registration offsets are representative of a distance between the matched points in pixel values in azimuth and range directions.

6. The method of any one of claims 1 to 5, wherein the matched points from the co-registered SAR images are matched at a sub-pixel resolution.

7. The method of any one of claims 1 to 6, wherein determining (506) the residual offsets between the matched points comprises determining a residual distance between the matched points from the co-registered SAR images.

8. The method of claim 7, wherein the residual offsets are determined in a range direction.

9. The method of any one of claims 1 to 8, wherein the scene comprises an object having an object height, and at least one point of the one or more points are located on the object.

10. The method of any one of claims 1 to 9, wherein the two or more SAR images have a similar imaging geometry within a pre-defined threshold, and a resolution above a resolution threshold value.

11. The method of any one of claims 1 to 10, wherein the two or more SAR images are obtained from one or more synthetic aperture radar antennas.

12. The method of any one of claims 1 to 11, wherein the SAR images are acquired from a space-borne platform or an air-borne platform.

13. A system for extracting three-dimensional (3D) features from synthetic aperture radar (SAR) images, comprising:

   a SAR image database (404) comprising a plurality of SAR images;
   a processor (410); and
   a non-transitory computer readable medium having stored thereon computer program code that is executable by the processor and that, when executed by the processor, configures the system to perform the method of any one of claims 1 to 12.

14. A non-transitory computer readable medium having stored thereon computer program code that is executable by a processor and that, when executed by the processor, causes the processor to perform the method of any one of claims 1 to 12.

*FIG. 1*

FIG. 2A

FIG. 2B

*FIG. 3A*

FIG. 3B

**FIG. 4**

500

```
┌────────────────────────────┐
│     Obtain SAR images      │⟋ 502
└────────────────────────────┘
              │
              ▼
┌────────────────────────────┐
│     Co-register images     │⟋ 504
└────────────────────────────┘
              │
              ▼
┌────────────────────────────┐
│  Determine residual offsets │⟋ 506
└────────────────────────────┘
              │
              ▼
┌────────────────────────────┐
│   Determine relative height │⟋ 508
└────────────────────────────┘
              │
              ▼
┌ ─ ─ ─ ─ ─ ─ ─ ─ ─ ─ ─ ─ ─ ┐
  Compensate for planimetric shift │⟋ 510
└ ─ ─ ─ ─ ─ ─ ─ ─ ─ ─ ─ ─ ─ ┘
              │
              ▼
┌ ─ ─ ─ ─ ─ ─ ─ ─ ─ ─ ─ ─ ─ ┐
  Generate 3D represenation    │⟋ 512
└ ─ ─ ─ ─ ─ ─ ─ ─ ─ ─ ─ ─ ─ ┘
```

FIG. 5

*FIG. 6*

**FIG. 7**

FIG. 8

*FIG. 9*

FIG. 10

**EUROPEAN SEARCH REPORT**

Application Number

EP 24 19 3173

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WELCH R ET AL: "3-D COMPUTATION AND DISPLAY OF TERRAIN MODELS FROM STEREO IMAGING RADAR DATA", REMOTE SENSING SCIENCE FOR THE NINETIES. MARYLAND, MAY 20 - 24, 1990; [PROCEEDINGS OF THE INTERNATIONAL GEOSCIENCE AND REMOTE SENSING SYMPOSIUM. (IGARSS)], NEW YORK, IEEE, US, vol. 3, 20 May 1990 (1990-05-20), pages 1967-1969, XP000146694, * figure 1 * * page 1967, left-hand column, lines 23-25 * * page 1967, right-hand column, line 14 - page 1968, right-hand column, line 10 * * page 1969, left-hand column, lines 9-14 * ----- | 1-15 | INV. G01S13/90 |
| X | DUBOIS C. ET AL: "Pixel-based approach for building heights determination by SAR radargrammetry", ISPRS ANNALS OF PHOTOGRAMMETRY, REMOTE SENSING AND SPATIAL INFORMATION SCIENCES, vol. II-3/W3, 12 November 2013 (2013-11-12), pages 19-24, XP093238685, DE ISSN: 2194-9050, DOI: 10.5194/isprsannals-II-3-W3-19-2013 * abstract; figures 1-6 * * page 19, left-hand column, lines 25-27 * * page 20, left-hand column, line 44 - page 21, left-hand column, line 26 * * page 23, left-hand column, lines 16-31 * ----- | 1-15 | TECHNICAL FIELDS SEARCHED (IPC) G01S |

The present search report has been drawn up for all claims

| Place of search | Date of completion of the search | Examiner |
|---|---|---|
| Munich | 14 January 2025 | Rodríguez González |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)